# FASCICULE DE BREVET EUROPEEN

(11) **EP 4 507 927 B1**
(45) Date de publication et mention de la délivrance du brevet: **19.11.2025**
(21) Numéro de dépôt: 23719812.2
(22) Date de dépôt: 24.03.2023
(51) Int. Cl.: B60R 19/48, B60R 21/0136, B60R 19/18

(54) **COMPOSANT D'ABSORPTION D'ÉNERGIE POUR ENSEMBLE DE PARE-CHOCS, ENSEMBLE DE PARE-CHOCS, ET VÉHICULE**
ENERGIEABSORPTIONSBAUTEIL FÜR EINE STOSSFÄNGERANORDNUNG, STOSSFÄNGERANORDNUNG UND FAHRZEUG
ABSORBER FOR BUMPER ASSEMBLY, BUMPER ASSEMBLY AND VEHICLE

(30) Priorité: 14.04.2022 CN 202210391360
(43) Date de publication de la demande: 19.02.2025
(73) Titulaire: Stellantis Auto SAS, 78300 Poissy (FR)
(72) Inventeur: WANG, Zi Ye, ShangHai, 200233 (CN); WANG, Hongri, SHANGHAI, 200233 (CN); ZHANG, Xiaoming, Shanghai Caohejing, Hi-tech Park SHANGAI, 200233 (CN); CAO, Rui, Shanghai, 200233 (CN); ZHANG, Yin, Shanghai, 200233 (CN)
(74) Mandataire: BCIP
(86) Numéro de dépôt international: PCT/FR2023/050419
(87) Numéro de publication internationale: WO 2023/198973

(56) Documents cités:
- JP-A- 2011 143 825
- JP-A- S62 122 848
- US-A1- 2017 225 637
- US-A1- 2019 023 206

## Description

### DOMAINE DE L'INVENTION

La présente invention concerne de manière générale le domaine des composants de véhicule. La présente invention concerne plus particulièrement un composant d'absorption d'énergie pour un ensemble de pare-chocs. La présente invention concerne également un ensemble de pare-chocs comprenant un tel composant d'absorption d'énergie, et un véhicule comprenant un tel ensemble de pare-chocs.

### ARRIÈRE-PLAN DE L'INVENTION

Afin d'améliorer la protection pour des usagers vulnérables de la route, tels que des piétons, en cas d'une collision entre un véhicule et un humain, de plus en plus de véhicules sont équipés d'un capot à soulèvement automatique.

Plus précisément, un ensemble de pare-chocs d'un véhicule comprend un corps de pare-chocs et un composant d'absorption d'énergie (également appelé un bloc d'absorption d'énergie) disposé derrière le corps de pare-chocs. Le composant d'absorption d'énergie est pourvu d'un canal de rétention s'étendant sensiblement dans la direction Y pour recevoir et retenir un tube de pression flexible, chaque extrémité duquel est reliée à un capteur de pression.

Lors d'une collision entre un piéton et le corps de pare-chocs, ce dernier est déformé au moins dans la zone d'impact, ce qui entraîne la déformation du composant d'absorption d'énergie et du tube de pression qui s'y trouve. La pression d'air dans le tube de pression varie à la suite de cette déformation, et cette variation de la pression d'air est enregistrée par le capteur de pression et transmise sous la forme d'un signal électrique à l'unité de commande du véhicule.

Si la valeur de la pression d'air dans le tube de pression dépasse un seuil prédéfini, l'unité de commande déclenche le soulèvement automatique du capot pour éviter tout contact entre la tête du piéton et les points durs dans le compartiment moteur. En même temps, grâce à la déformation du capot, l'amortissement de l'impact de la tête est augmenté et l'énergie de l'impact de la tête est absorbée, ce qui réduit considérablement des blessures à la tête du piéton.

Cependant, l'inconvénient de la configuration existante est que, la sensibilité de la déformation du tube de pression disposé le long du canal de rétention est souvent difficile à maintenir de façon constante sur toute sa longueur. Par exemple, à certains endroits du canal de rétention, en particulier aux endroits incurvés où la courbure est importante, la sensibilité de la déformation du tube sous pression est réduite en raison des contraintes internes plus élevées du tube à ces endroits (c'est-à-dire que la tension du tube est concentrée à ces endroits). C'est-à-dire que le tube de pression doit être soumis à une force externe plus élevée à ces endroits qu'à d'autres endroits pour obtenir le même niveau de déformation, il est donc difficile de précisément calibrer le seuil de la pression d'air qui déclenche le soulèvement automatique du capot. Des composant d'absorption d'énergie pour un ensemble de pare-chocs sont divulgués par les documents US 2019/023206 A1 et JP S62 122848 A, ce dernier correspondant au préambule de la revendication 1.

### OBJET ET RÉSUMÉ DE L'INVENTION

La présente invention a pour objet de proposer un composant d'absorption d'énergie pour un ensemble de pare-chocs afin de pallier les inconvénients de l'art antérieur mentionnés ci-dessus. C'est-à-dire, le composant d'absorption d'énergie selon la présente invention permet au tube de pression disposé dans le composant d'absorption de maintenir sa sensibilité de la déformation de façon sensiblement constante sur toute sa longueur, de sorte que le seuil de la pression d'air pour le déclenchement du soulèvement automatique du capot peut être précisément calibré.

A cet effet, un premier aspect de la présente invention propose un composant d'absorption d'énergie pour un ensemble de pare-chocs avec les caractéristiques de la revendication 1.

Selon un mode de réalisation préféré de la présente invention, le nombre de crans disposés de chaque côté dudit tube de pression est identique.

Selon un mode de réalisation préféré de la présente invention, ledit composant d'absorption d'énergie est en outre pourvu d'une portion concave de rétention disposée au-dessus de ladite section intermédiaire, de manière à retenir un capteur de pression relié à une extrémité dudit tube de pression.

Selon un mode de réalisation préféré de la présente invention, ledit canal de rétention est prévu sur une surface arrière dudit composant d'absorption d'énergie pour permettre audit tube de pression de heurter une poutre de choc disposée derrière ledit composant d'absorption d'énergie en cas d'un impact externe sur ledit corps de pare-chocs.

Selon un mode de réalisation préféré de la présente invention, ladite poutre de choc est pourvue d'au moins un point dur faisant saillie vers l'avant et la paroi dudit canal de rétention est pourvue d'au moins un cran dans une zone adjacente audit point dur.

Selon un mode de réalisation préféré de la présente invention, ledit point dur est un élément de fixation configuré pour relier un élément environnemental à ladite poutre de choc.

Un deuxième aspect de la présente invention propose un ensemble de pare-chocs, comprenant : un corps de pare-chocs ; un composant d'absorption d'énergie fixé audit corps de pare-chocs, et étant conforme au premier aspect de la présente invention ; et un tube de pression flexible retenu dans ledit canal de rétention et un capteur de pression relié à une extrémité dudit tube de pression.

Un troisième aspect de la présente invention propose un véhicule, comprenant un ensemble de pare-chocs selon le deuxième aspect de la présente invention.

Par rapport à l'art antérieur, le composant d'absorption d'énergie pour l'ensemble de pare-chocs selon la présente invention présente plusieurs avantages, notamment : en prévoyant la pluralité de crans disposée alternativement des deux côtés du tube de pression sur la paroi de la section incurvée du canal de rétention, il est non seulement possible de réaliser un affaiblissement du composant d'absorption d'énergie à ces endroits et de libérer les contraintes internes du tube de pression, mais également de bien contraindre le prolongement du tube de pression, donc le canal de rétention est capable d'assurer la force de contrainte pour le tube de pression tout en maintenant la sensibilité de la déformation du tube de pression de façon sensiblement constante sur toute sa longueur ; en outre, ce composant d'absorption d'énergie présente une structure simple, permet une fabrication facile, présente un faible coût économique, et peut être largement utilisé dans divers types d'ensembles de pare-chocs.

### BRÈVE DESCRIPTION DES DESSINS

D'autres caractéristiques et avantages de la présente invention apparaîtront plus clairement à la lecture de la description détaillée qui suit de modes de réalisation préférés de la présente invention par référence aux figures ci-joints. Les numéros de référence identiques aux figures indiquent les composants identiques ou similaires.
La Fig.1 est une vue schématique du côté arrière d'un ensemble de pare-chocs selon un mode de réalisation de la présente invention ;
La Fig.2 est une vue schématique du côté arrière d'un composant d'absorption d'énergie de l'ensemble de pare-chocs de la Fig.1 ;
La Fig.3 est une vue schématique agrandie de la zone A de la Fig.1 ;
La Fig.4 est une vue schématique agrandie de la zone B de la Fig.1 ;
La Fig.5 est une autre vue schématique du côté arrière du composant d'absorption d'énergie de la Fig.2, dans laquelle un tube de pression et un capteur de pression disposés sur le composant d'absorption d'énergie sont illustrés ;
La Fig.6 est une vue schématique partielle en coupe de l'ensemble de pare-chocs de la Fig.1 et d'une poutre de choc disposée derrière l'ensemble de pare-chocs ;
La Fig.7 est une vue schématique agrandie de la zone C de la Fig.2 ;
La Fig.8 est une vue schématique perspective de la zone C de la Fig.2 ;
La Fig.9 est une vue schématique perspective de la poutre de choc située derrière l'ensemble de pare-chocs de la Fig.1.

### DESCRIPTION DÉTAILLÉE DES MODES DE RÉALISATION

La mise en œuvre et l'utilisation des modes de réalisation sont décrites en détail ci-dessous. Cependant, il est entendu que les modes de réalisation spécifiques décrits ici n'illustrent que, à titre indicatif, des manières particulières de mettre en œuvre et d'utiliser la présente invention, mais ne sont pas destinés à limiter la portée de protection de la présente invention.

Dans la description, les indications directionnelles, telles que « supérieur(e) », « inférieur(e) », « gauche » et « droit(e) », utilisées pour décrire les positions structurelles des composants, ne sont pas absolues mais relatives. Ces indications directionnelles sont appropriées lorsque les composants sont agencés comme représentés aux figures. Toutefois, lorsque les positions des composants aux figures sont modifiées, ces indications directionnelles devraient être modifiées en conséquence.

Dans la description, les indications « avant » et « arrière » sont définies par rapport à l'avant et à l'arrière du véhicule dans la direction X, et le terme « l'ensemble de pare-chocs » fait spécifiquement référence à l'ensemble de pare-chocs avant du véhicule. En outre, la direction X indique la direction longitudinale du véhicule, la direction Y indique la direction transversale du véhicule, et la direction Z indique la direction verticale du véhicule.

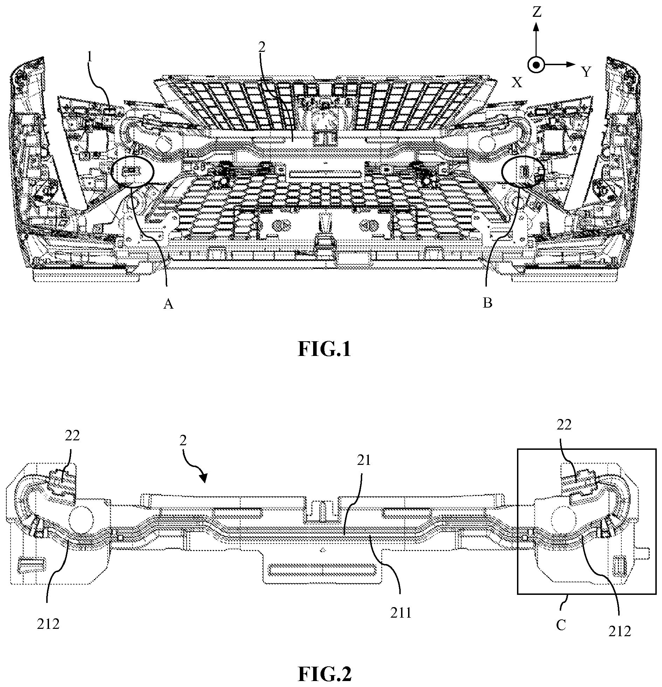

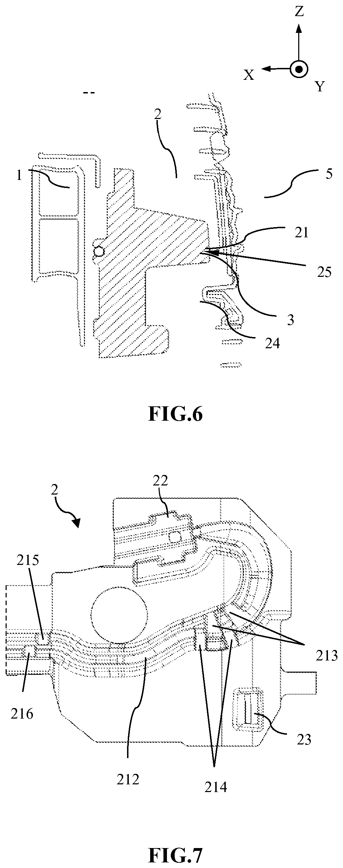

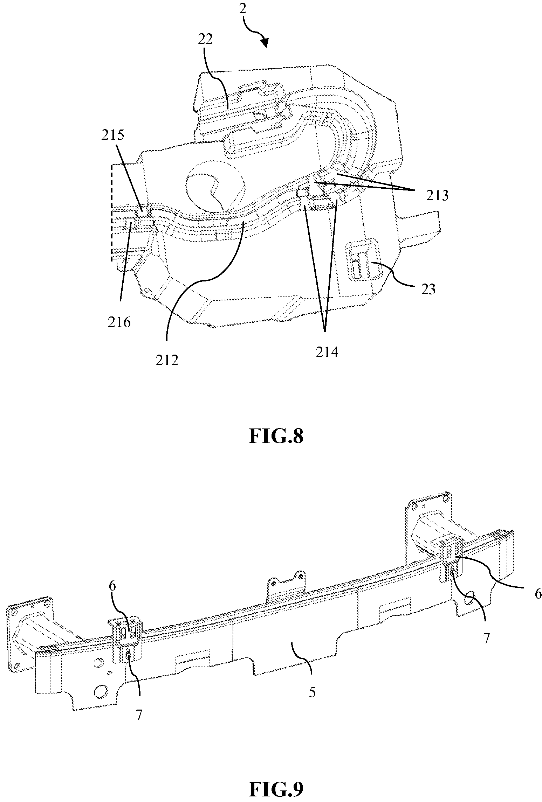

Un mode de réalisation préféré de la présente invention est décrit ci-dessous à l'aide des Figures 1 à 9. Par référence notamment aux Figures 1 et 6, la configuration avant illustrée du véhicule comprend principalement un corps de pare-chocs 1, un composant d'absorption d'énergie 2 et une poutre de choc 5 disposés séquentiellement de l'avant à l'arrière dans la direction X. Le corps de pare-chocs 1 et le composant d'absorption d'énergie 2 pourvu d'un tube de pression flexible 3 et d'un capteur de pression 4 sont généralement fixés l'un à l'autre pour former un ensemble de pare-chocs du véhicule.

Par référence aux Figures 1, 3, 4 et 6, le corps de pare-chocs 1 s'étend sensiblement dans le plan YZ pour former la surface avant du véhicule, et le composant d'absorption d'énergie 2 s'étend entre le corps de pare-chocs 1 et la poutre (transversale) de choc 5 dans la direction Y (comme la direction de longueur) pour absorber l'énergie par déformation en cas d'un impact externe frontal sur le corps de pare-chocs 1.

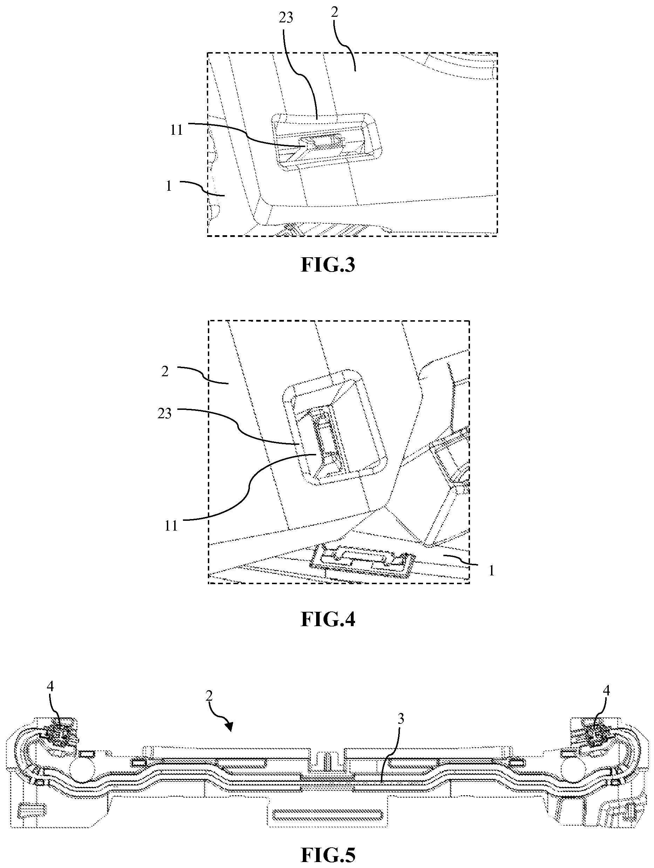

Le composant d'absorption d'énergie 2 est, par exemple, en plastique moussé et pourvu de deux rainures 23 adjacentes à ses extrémités dans la direction Y (c'est-à-dire la rainure gauche sur la Fig.3 et la rainure droite sur la Fig.4), et le corps de pare-chocs 1 est pourvu de deux clips 11 à des endroits correspondants (c'est-à-dire le clip gauche sur la Fig.3 et le clip droit sur la Fig.4), de sorte que le corps de pare-chocs 1 et le composant d'absorption d'énergie 2 peuvent être fixés l'un à l'autre par la coopération des rainures 23 avec les clips 11.

Par référence aux Figures 2, 5 et 6, la surface arrière 24 du composant d'absorption d'énergie 2 est pourvue d'un canal de rétention 21 (c'est-à-dire une rainure de rétention) adapté pour retenir le tube de pression flexible 3. Le tube de pression 3 peut être assemblé et retenu dans le canal de rétention 21 via une ouverture 25 de la surface arrière 24, et heurter la poutre de choc arrière 5 via l'ouverture 25 pour se déformer en cas d'un impact externe sur le corps de pare-chocs 1.

La surface arrière 24 du composant d'absorption d'énergie 2 est en outre pourvue de deux portions concaves de rétention 22 adjacentes au haut du composant d'absorption d'énergie 2 et situées à deux extrémités du canal de rétention 21 pour retenir deux capteurs de pression 4 reliés à deux extrémités du tube de pression 3. Ces capteurs de pression 4 sont utilisés pour enregistrer la variation de la pression d'air dans le tube de pression 3 à la suite de la déformation du tube de pression 3, et pour transmettre cette variation de la pression d'air sous la forme d'un signal électrique à l'unité de contrôle du véhicule afin de déclencher le soulèvement automatique du capot.

Par référence aux Figures 2, 5, 7 et 8, le canal de rétention 21 comprend une section intermédiaire 211 s'étendant sensiblement dans la direction Y et deux sections incurvées 212 s'étendant à partir de deux extrémités de la section intermédiaire 211. Ces deux sections incurvées 212 s'étendent de façon incurvée vers le haut jusqu'à deux portions concaves de rétention 22, de façon symétrique par rapport à l'axe central du véhicule dans la direction X. Ces portions concaves de rétention 22 sont ainsi situées au-dessus de la section intermédiaire 211 et d'au moins une partie des sections incurvées 212, de sorte que les capteurs de pression 4 sont disposés au-dessus de la zone d'impact, ce qui permet d'éviter d'endommager les capteurs de pression 4 en cas d'un impact.

Afin d'éviter une réduction de la sensibilité de la déformation du tube de pression 3 sous pression dans les sections incurvées 212, la paroi de chaque section incurvée 212 est pourvue d'une pluralité de crans. La pluralité de crans est configurée pour être disposée séquentiellement et alternativement des deux côtés radiaux du tube de pression 3 dans la direction d'extension du canal de rétention 21.

Plus particulièrement, pour chaque section incurvée 212 du canal de rétention 21, la paroi est pourvue de préférence d'un nombre identique de crans des deux côtés radialement opposés du tube de pression 3, tels que deux premiers crans 213 situés du côté supérieur du tube de pression 3 (c'est-à-dire situés dans la paroi supérieure du canal de rétention 21) et deux deuxièmes crans 214 situés du côté inférieur du tube de pression 3 (c'est-à-dire situés dans la paroi inférieure du canal de rétention 21), comme illustrés. Les deuxièmes crans 214 et les premiers crans 213 sont disposés séquentiellement et alternativement de bas en haut dans la direction d'extension/la direction de longueur de la section incurvée 212. C'est-à-dire que les deuxièmes crans 214 et les premiers crans 213 sont décalés dans la direction radiale du tube de pression 3, de sorte que pour chaque position de longueur du tube de pression 3, au plus l'une de la paroi supérieure et la paroi inférieure du canal de rétention 21 situées des deux côtés de cette position de longueur forme un cran. Cette disposition permet non seulement d'affaiblir le composant d'absorption d'énergie 2 à ces endroits et de libérer les contraintes internes du tube de pression 3 grâce à ces crans, de sorte que la sensibilité de la déformation des sections incurvées 212 du tube de pression 3 sous pression reste sensiblement la même que celle de la section intermédiaire 211, mais également d'assurer la force de rétention du tube de pression 3 dans les sections incurvées 212 par les parties de la paroi opposées aux crans, ce qui permet de bien contraindre le prolongement du tube de pression 3. Il est entendu que le nombre de premiers crans 213 et de deuxièmes crans 214 n'est pas limitatif et peut être déterminé en fonction des besoins réels, et que le nombre de premiers crans 213 et celui de deuxièmes crans 214 peuvent être différents.

Par référence aux Figures 7 à 9, la poutre de choc 5 est généralement pourvue d'au moins un point dur faisant saillie vers l'avant. Ce point dur peut être un élément de fixation reliant un élément environnemental à la poutre de choc 5, tel qu'un support de fixation 6 reliant une traverse d'un réservoir d'eau à la poutre de choc 5, et une vis 7 fixant le support de fixation 6 à la poutre de choc 5. En cas d'un impact, la présence de ce point dur peut provoquer une torsion indésirable de la partie du composant d'absorption d'énergie 2 et du tube de pression 3 heurtant le point dur de la poutre de choc 5, ce qui réduit la sensibilité de la déformation de cette partie sous pression.

Par conséquent, la paroi du canal de rétention 21 est de préférence pourvue d'au moins un cran dans une zone adjacente à ce point dur (par exemple, dans une zone d'une extrémité de la section intermédiaire 211), tels que un troisième cran 215 situé du côté supérieur du tube de pression 3 (c'est-à-dire situé dans la paroi supérieure du canal de rétention 21) et un quatrième cran 216 situé du côté inférieur du tube de pression 3 (c'est-à-dire situé dans la paroi inférieure du canal de rétention 21). Le troisième cran 215 et le quatrième cran 216 peuvent être décalés ou alignés dans la direction radiale du tube de pression 3 pour réaliser un affaiblissement du composant d'absorption d'énergie 2 au niveau de ces crans. Il est entendu que le nombre de troisièmes crans 215 et de quatrièmes crans 216 n'est pas limitatif et peut être déterminé en fonction des besoins réels, et que le nombre de troisièmes crans 215 et celui de quatrièmes crans 216 peuvent être identiques ou différents.

Le contenu technique et les caractéristiques techniques de la présente invention ont été révélés ci-dessus. Il est entendu que diverses modifications et/ou améliorations évidentes pour l'homme du métier peuvent être apportées aux divers modes de réalisation décrits dans la présente description sans sortir de la portée de protection de la présente invention.

La description des modes de réalisation est exemplaire et non-limitative, et la portée de protection de la présente invention est déterminée par les revendications.

## Revendications

1. Composant d'absorption d'énergie pour un ensemble de pare-chocs comprenant un corps de pare-chocs (1) formant une surface avant d'un véhicule, ledit composant d'absorption d'énergie (2) étant configuré pour être disposé derrière ledit corps de pare-chocs (1) et pourvu d'un canal de rétention (21) adapté pour retenir un tube de pression flexible (3), de manière à déformer ledit tube de pression (3) en cas d'un impact externe sur ledit corps de pare-chocs (1), ledit canal de rétention (21) comprenant une section intermédiaire (211) s'étendant dans la direction transversale dudit composant d'absorption d'énergie (2) et une section incurvée (212) s'étendant à partir d'une extrémité de ladite section intermédiaire (211), une paroi de ladite section incurvée (212) étant pourvue d'une pluralité de crans configurée pour être disposée alternativement des deux côtés dudit tube de pression (3) dans la direction d'extension dudit canal de rétention (21), **caractérisé en ce que** ladite section incurvée (212) est configurée pour s'étendre de façon incurvée vers le haut à partir de l'extrémité de ladite section intermédiaire (211).

2. Composant d'absorption d'énergie pour un ensemble de pare-chocs selon la revendication 1, **caractérisé en ce que** le nombre de crans disposés de chaque côté dudit tube de pression (3) est identique.

3. Composant d'absorption d'énergie pour un ensemble de pare-chocs selon la revendication 1, **caractérisé en ce que** ledit composant d'absorption d'énergie (2) est en outre pourvu d'une portion concave de rétention (22) disposée au-dessus de ladite section intermédiaire (211), de manière à retenir un capteur de pression (4) relié à une extrémité dudit tube de pression (3).

4. Composant d'absorption d'énergie pour un ensemble de pare-chocs selon l'une quelconque des revendications 1 à 3, **caractérisé en ce que** ledit canal de rétention (21) est prévu sur une surface arrière (24) dudit composant d'absorption d'énergie (2) pour permettre audit tube de pression (3) de heurter une poutre de choc (5) disposée derrière ledit composant d'absorption d'énergie (2) en cas d'un impact externe sur ledit corps de pare-chocs (1).

5. Composant d'absorption d'énergie pour un ensemble de pare-chocs selon la revendication 4, **caractérisé en ce que** ladite poutre de choc (5) est pourvue d'au moins un point dur faisant saillie vers l'avant et la paroi dudit canal de rétention (21) est pourvue d'au moins un cran dans une zone adjacente audit point dur.

6. Composant d'absorption d'énergie pour un ensemble de pare-chocs selon la revendication 5, **caractérisé en ce que** ledit point dur est un élément de fixation configuré pour relier un élément environnemental à ladite poutre de choc (5).

7. Ensemble de pare-chocs, **caractérisé en ce qu'**il comprend :
un corps de pare-chocs (1) ;
un composant d'absorption d'énergie (2) fixé audit corps de pare-chocs (1), et étant conforme à l'une quelconque des revendications 1 à 6 ; et
un tube de pression flexible (3) retenu dans ledit canal de rétention (21) et un capteur de pression (4) relié à une extrémité dudit tube de pression (3).

8. Véhicule, **caractérisé en ce qu'**il comprend un ensemble de pare-chocs selon la revendication 7.

## Patentansprüche

1. Energieabsorbierendes Bauteil für eine Stoßfängeranordnung, umfassend einen Stoßfängerkörper (1), der eine Vorderfläche eines Fahrzeugs bildet, wobei das Energieabsorbierbauteil (2) so konfiguriert ist, dass es hinter dem Stoßfängerkörper (1) angeordnet ist und mit einem Rückhaltekanal (21) versehen ist, der zum Zurückhalten eines flexiblen Druckrohres (3) geeignet ist, um das Druckrohr (3) bei einem externen Aufprall auf den Stoßfängerkörper (1) zu verformen, wobei der Rückhaltekanal (21) einen Zwischenabschnitt (211) aufweist, der sich in Querrichtung des Absorptionsbauteils erstreckt Energieversorgungseinrichtung (2) und einen gekrümmten Abschnitt (212), der sich von einem Ende des Zwischenabschnitts (211) erstreckt, wobei eine Wand des gekrümmten Abschnitts (212) mit einer Vielzahl von Rastkerben versehen ist, die so konfiguriert sind, dass sie abwechselnd auf beiden Seiten des Druckrohres (3) in der Erstreckungsrichtung des Haltekanals (21) angeordnet sind, **dadurch gekennzeichnet, dass** der gekrümmte Abschnitt (212) so konfiguriert ist, dass er sich von dem Ende des Zwischenabschnitts (211) nach oben gekrümmt erstreckt.

2. Energieabsorbierendes Bauteil für eine Stoßfängeranordnung nach Anspruch 1, **dadurch gekennzeichnet, dass** die Anzahl der auf jeder Seite des Druckrohres (3) angeordneten Rastungen gleich ist.

3. Energieabsorbierendes Bauteil für eine Stoßfängeranordnung nach Anspruch 1, **dadurch gekennzeichnet, dass** das energieabsorbierende Bauteil (2) ferner mit einem konkaven Halteabschnitt (22) versehen ist, der oberhalb des Zwischenabschnitts (211) angeordnet ist, um einen Drucksensor (4) zu halten, der mit einem Ende des Druckrohres (3) verbunden ist.

4. Energieabsorbierendes Bauteil für eine Stoßfängeranordnung nach einem der Ansprüche 1 bis 3, **dadurch gekennzeichnet, dass** der Rückhaltekanal (21) an einer Rückseite (24) des energieabsorbierenden Bauteils (2) vorgesehen ist, um es dem Druckrohr (3) zu ermöglichen, bei einem externen Aufprall auf den Stoßfängerkörper (1) einen hinter dem energieabsorbierenden Bauteil (2) angeordneten Stoßbalken (5) zu treffen.

5. Energieabsorbierendes Bauteil für eine Stoßfängeranordnung nach Anspruch 4, **dadurch gekennzeichnet, dass** der Stoßbalken (5) mit wenigstens einem nach vorne vorstehenden harten Punkt versehen ist und die Wand des Rückhaltekanals (21) mit wenigstens einer Rastung in einem Bereich benachbart zu dem harten Punkt versehen ist.

6. Energieabsorbierende Komponente für eine Stoßfängeranordnung nach Anspruch 5, **dadurch gekennzeichnet, dass** der feste Punkt ein Befestigungselement ist, das so konfiguriert ist, dass es ein Umgebungselement mit dem Stoßbalken (5) verbindet.

7. Stoßfängeranordnung, **dadurch gekennzeichnet, dass** sie umfasst:
einem Stoßfängerkörper (1);
Energieabsorbierendes Bauteil (2), das an dem Stoßfängerkörper (1) befestigt ist und einem der Ansprüche 1 bis 6 entspricht; und
ein flexibles Druckrohr (3), das in dem Rückhaltekanal (21) gehalten ist, und einen Drucksensor (4), der mit einem Ende des Druckrohres (3) verbunden ist.

8. Fahrzeug, **dadurch gekennzeichnet, dass** es eine Stoßfängeranordnung nach Anspruch 7 umfasst.

## Claims

1. An energy absorbing Component for a bumper assembly comprising a bumper body (1) forming a front surface of a vehicle, said energy absorbing component (2) being configured to be disposed behind said bumper body (1) and provided with a retention channel (21) adapted to retain a flexible pressure tube (3), so as to deform said pressure tube (3) in the event of an external impact on said bumper body (1), said retention channel (21) comprising an intermediate section (211) extending in the transverse management of said component energy absorption device (2) and a curved section (212) extending from one end of said intermediate section (211), a wall of said curved section (212) being provided with a plurality of notches configured to be arranged alternately on both sides of said pressure tube (3) in the extension management of said retention channel (21), wherein said curved section (212) is configured to extend in an upwardly curved manner from the end of said intermediate section (211).

2. Energy absorption Component for a bumper assembly according to claim 1, wherein the quantity of notches arranged on each side of said pressure tube (3) is identical.

3. An energy absorption Component for a bumper assembly according to claim 1, wherein said energy absorption component (2) is further provided with a concave retention portion (22) disposed above said intermediate section (211), so as to retain a pressure sensor (4) connected to one end of said pressure tube (3).

4. An energy absorption Component for a bumper assembly according to any one of claims 1 to 3, wherein said retaining channel (21) is provided on a rear surface (24) of said energy absorption component (2) to allow said pressure tube (3) to strike a shock beam (5) disposed behind said energy absorption component (2) in the event of an outside impact on said bumper body (1).

5. Energy absorbing Component for a bumper assembly according to claim 4, wherein said bumper beam (5) is provided with at least one hard point projecting forwards and the wall of said retaining channel (21) is provided with at least one notch in a zone adjacent to said hard point.

6. Energy-absorbing Component for a bumper assembly according to claim 5, wherein said hard point is a fastening element configured to connect an environmental item to said bumper beam (5).

7. Bumper assembly, **characterised in that** it comprises:
a bumper body (1);
an energy absorption component (2) fixed to said bumper body (1), and being in accordance with any one of claims 1 to 6; and
a flexible pressure tube (3) retained in said retention channel (21) and a pressure sensor (4) connected to one end of said pressure tube (3).

8. Vehicle, **characterised in that** it comprises a bumper assembly according to claim 7.
